# EUROPEAN PATENT APPLICATION

(11) **EP 1 432 262 A1**
(43) Date of publication of application: **23.06.2004**
(21) Application number: 02028631.6
(22) Date of filing: 20.12.2002
(51) Int. Cl.: H04Q 7/38, H04L 12/56, H04L 12/28

(54) **Protocol context preservation in mobile communication systems**

(71) Applicant: MATSUSHITA ELECTRIC INDUSTRIAL CO., LTD., Kadoma-city, Osaka 571-8501 (JP)
(72) Inventor: Petrovic, Dragan, 64295 Darmstadt (DE); Seidel, Eiko, 64285 Darmstadt (DE)
(74) Representative: Grünecker, Kinkeldey, Stockmair & Schwanhäusser Anwaltssozietät

(57) **Abstract**

A cellular system is provided that comprises a mobile station, a first base station in a source cell, a first radio network controller for controlling the first base station, a second base station in a target cel, and a second radio network controller for controlling the second base station. The first radio network controller and/or the first base station comprise a flow control unit and a function for determining that a cell change is to be performed. The cell change is for transferring the radio link of the mobile station from the source cell to the target cell. The flow control unit is adapted to block capacity assignments for data transmissions from the first radio network controller to the first base station before a network connection to the target cell is established. The technique is particularly applicable to UMTS systems.

## Description

This invention relates to radio resource management in communication systems and is particularly applicable to cellular systems.

A common technique for error detection of non-real time services is Hybrid ARQ (HARQ) which is based on Automatic Repeat reQuest (ARQ) schemes that may be combined with Forward Error Correction (FEC). If an error is detected by Cyclic Redundancy Check (CRC), the receiver requests the transmitter to send additional bits. From different existing schemes the stop-and-wait (SAW) and selective-repeat (SR) continuous ARQ are most often used in mobile communication.

A data unit will be encoded before transmission. Depending on the bits that are retransmitted three different types of ARQ are defined, see e.g. S. Kallel, "Analysis of a type II hybrid ARQ scheme with code combining", IEEE Transactions on Communications, Vol.38#8, August 1990, and S. Kallel et al., "Throughput performance of Memory ARQ schemes", IEEE Transactions on Vehicular Technology, Vol.48#3, May 1999. These types are:
Type I: The erroneous PDU's are discarded and a new copy of that PDU is retransmitted and decoded separately. There is no combining of earlier and later versions of that PDU.
Type II: The erroneous PDU that needs to be retransmitted is not discarded, but is combined with some incremental redundancy bits provided by the transmitter for subsequent decoding. Retransmitted PDU's sometimes have higher coding rates and are combined at the receiver with the stored values. That means that only little redundancy is added in each retransmission.
Type III: Is the same as Type II only that every retransmitted PDU is now self-decodable. This implies that the PDU is decodable without the combination with previous PDU's. This is useful if some PDU's are so heavily damaged that almost no information is reusable.

Another technique for link adaptation is Adaptive Modulation and Coding (AMC). A description of AMC can be found in 3GPP TSG RAN "Physical Layer Aspects of High Speed Downlink Packet Access" TR25.848 V5.0.0 and A. Ghosh et al., "Performance of Coded Higher Order Modulation and Hybrid ARQ for Next Generation Cellular CDMA Systems", Proceedings of VTC 2000.

The principle of AMC is to change the modulation and coding format in accordance with variations in the channel conditions, subject to system restrictions. The channel conditions can be estimated e.g. based on feedback from the receiver. In a system with AMC, users in favourable positions e.g. users close to the cell site are typically assigned higher order modulation with higher code rates (e.g. 64 QAM with R=3/4 Turbo Codes), while users in unfavourable positions e.g. users close to the cell boundary, are assigned lower order modulation with lower code rates (e.g. QPSK with R=1/2 Turbo Codes). In the following the different combinations of coding and modulation will be referred to as Modulation Coding Scheme (MCS) levels. A transmission will be split into Transmission Time Intervals (TTI), whereas the MCS level could change each TTI. TTI interval for HSDPA (High Speed Downlink Packet Access, refer to section 0) is equal to 2 ms. The main benefits of AMC are higher data rates available for users in favourable positions which in turn increases the average throughput of the cell, and reduced interference variation due to link adaptation based on variations in the modulation/coding scheme instead of variations in transmit power.

The transmission format of a packet has yet another configurable parameter. By increasing the number of orthogonal codes in one TTI, the overall amount of information that can be transmitted is also increased. In the following text, the number of orthogonal codes and MCS will be referred to as Transmission Format Resource Combination (TFRC).

Packet scheduling is a resource management algorithm used for allocating transmission opportunities and transmission formats to the users admitted to a shared medium. Thus, it is used in packet based mobile radio networks in combination with adaptive modulation and coding to maximise throughput e.g. by allocating transmission opportunities to the users in favourable channel conditions.

While the above description of the background art has mainly focused on retransmission protocols such as HARQ schemes, link adaptation techniques such as AMC and packet scheduling, a known field where such techniques could be applied, will now be described in more detail with reference to the figure drawings. More particularly, it will now be referred to the HSDPA (High Speed Downlink Packet Access) technique which is standardised in 3GPP (Third Generation Partnership Project) as a feature of UMTS (Universal Mobile Telecommunication System).

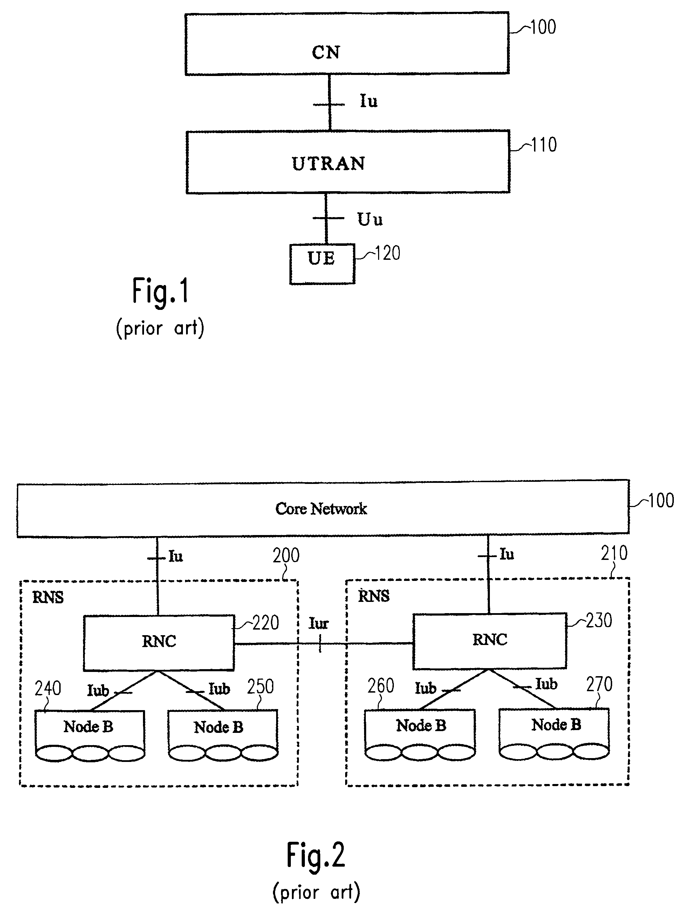

The high level architecture of the UMTS Architecture is shown in FIG. 1 (see e.g. H. Holma, et al., "WCDMA for UMTS", John Wiley, 2000). The network elements are functionally grouped into Core Network (CN) 100, UMTS Terrestrial Radio Access Network (UTRAN) 110 and User Equipment (UE) 120. UTRAN 110 is responsible for handling all radio-related functionality, while CN 100 is responsible for routing calls and data connections to external networks. The interconnections of these network elements are defined by open interfaces lu and Uu as can be seen in the figure. It should be noted that UMTS system is modular and it is therefore possible to have several network elements of the same type.

FIG. 2 illustrates an architecture of UTRAN in more detail. A number of Radio Network Controllers (RNC) 220, 230 are connected to CN 100. Each RNC 220, 230 controls one or several base stations (Node B's) 240-270 which in turn communicate with the UEs 120. An RNC 220, 230 controlling several base stations 240-270 is called Controlling RNC (C-RNC) for these base stations. A set of controlled base stations accompanied by their C-RNC is referred to as Radio Network Subsystem (RNS) 200, 210.

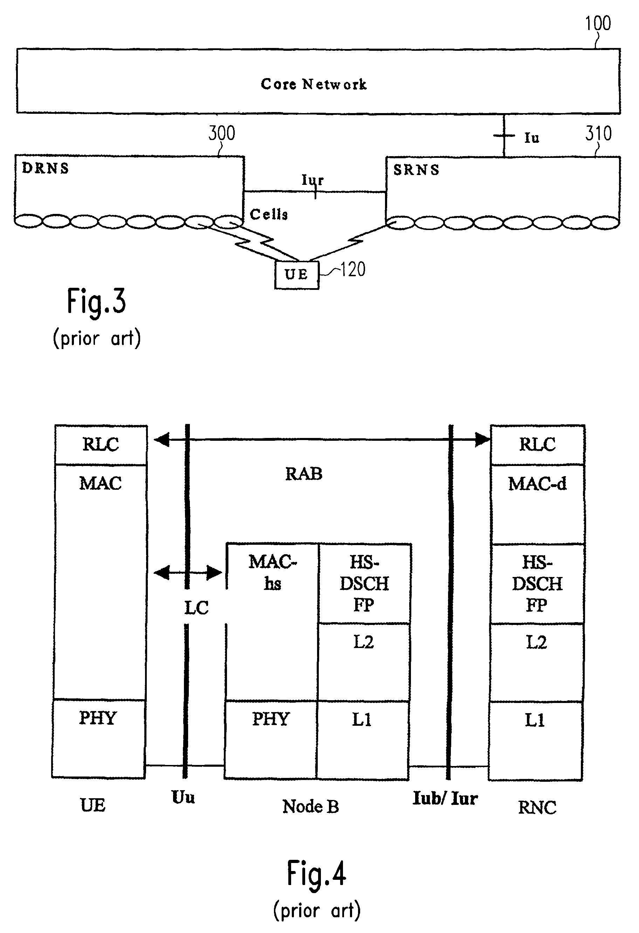

For each connection between User Equipment 120 and the UTRAN 110, one RNS 200, 210 is the Serving RNS (S-RNS). It maintains the lu connection with the Core Network (CN) 100. When required, Drift RNSs (D-RNS) 300 support the Serving RNS 310 by providing radio resources as shown in FIG. 3. Respective RNCs are termed Serving RNC (S-RNC) 310 and Drift RNC (D-RNC) 300. In the following, it may for simplicity be assumed that C-RNC and D-RNC are identical, so that only the abbreviations S-RNC or RNC will be used.

High Speed Downlink Packet Access (HSDPA) is a technique that is standardised in UMTS Release 5. It shall provide higher data rates in the downlink by introducing enhancements at the Uu interface such as adaptive modulation and coding. HSDPA relies on the hybrid Automatic Repeat Request protocol (HARQ) Type II/III, rapid selection of users which are active on the shared channel, and adaptation of transmission format parameters according to the time varying channel conditions.

Referring now to FIG. 4, the User Plane Radio Interface Protocol Architecture of HSDPA is shown as described in 3GPP TSG RAN TR 25.308, "High Speed Downlink Packet Access (HSDPA): Overall Description Stage 2", V5.2.0. The HARQ protocol and scheduling functions belong to the MAC-hs sublayer which is distributed across Node B 240-270 and UE 120. It should be noted that an SR ARQ protocol based on sliding window mechanisms can be also established between RNC 220, 230 and UE 120 on the level of the RLC sublayer in an acknowledged mode. The service that is offered from the RLC sublayer for point-to-point connection between CN 100 and UE 120 is referred to as Radio Access Bearer (RAB). Each RAB is subsequently mapped to a service offered from MAC layer. This service is referred to as Logical Channel (LC).

In the architecture of FIG. 4, HS-DSCH FP (High Speed Downlink Shared Channel Frame Protocol) is responsible for flow control between Node B 240-270 and RNC 220, 230. It determines the capacity that can be granted to RNC 220, 230 for transmitting packets across the transport network based on requests obtained from RNC 220, 230. More specifically, the capacity is requested by CAPACITY REQUEST messages of HS-DSCH FP originating from S-RNC 310. The permission to transmit a certain amount of data over a certain period of time is granted by CAPACITY GRANT messages sent from Node B 240-270.

Parameters of the protocols are configured by signalling in the Control Plane. This signalling is governed by the Radio Resource Control (RRC) protocol for the signalling between the radio network (i.e. S-RNC 310 and UE 120) and by application protocols, the Node B Application Part (NBAP) on the lub interface and the RNSAP (Radio Network Subsystem Application Part) on the lur interface.

Before discussing in more detail the aspect of mobility management within UTRAN, some definitions will now be given according to 3GPP TR 21.905, "Vocabulary for 3GPP Specifications", V 5.1.0. Some procedures connected to mobility management will be explained afterwards.

The term "radio link" is a logical association between single UE and a single UTRAN access point. Its physical realisation comprises radio bearer transmissions.

A "handover" is defined as a transfer of MS (mobile station) connection from one radio bearer to another (hard handover) with a temporary break in connection or inclusion/exclusion of a radio bearer to/from MS connection so that UE is constantly connected UTRAN (soft handover). Soft handover is specific for networks employing Code Division Multiple Access (CDMA) technology. Handover execution is controlled by the S-RNC in a mobile radio network.

An "active set" comprises a set of radio links simultaneously involved in a specific communication service between MS and radio network.

An "active set update procedure" modifies the active set of the communication between UE and UTRAN, see e.g. 3GPP TSG RAN WG2, "Radio Resource management Strategies", V.4.0.0. The procedure comprises three functions: radio link addition, radio link removal and combined radio link addition and removal. The maximum number of simultaneous radio links is set to eight. New radio links are added to the active set once the pilot signal strengths of respective base stations exceed a certain threshold relative to the pilot signal of the strongest member within an active set. A radio link is removed from the active set once the pilot signal strength of the respective base station exceeds a certain threshold relative to the strongest member of the active set. The threshold for radio link addition is typically chosen to be higher than that for the radio link deletion. Hence, addition and removal events form a hysteresis with respect to pilot signal strengths. Pilot signal measurements are reported to the network (S-RNC) from UE by means of RRC signalling. Before sending measurement results, some filtering is usually performed to average out the fast fading. Typical filtering duration is about 200 ms (see, e.g., 3GPP TSG RAN WG2, "Requirements for Support of Radio Resource Management (FDD)", V.4.0.0) and it contributes to handover delay. Based on measurement results, S-RNC may decide to trigger the execution of one of the functions of the active set update procedure.

It is to be noted that the HSDPA architecture may be distributed in two different aspects: (1) downlink transmitting entities of the retransmission protocols, RLC and MAC-hs, are located in S-RNC and Node B respectively, and (2) radio resource management algorithms, handover control and packet scheduling, are based on two independent measurements obtained from UE and are located in S-RNC and Node B respectively. These features have certain implications on mobility management and context preservation in HSDPA.

HS-PDSCH (High Speed Physical Downlink Shared CHannel) is a physical channel associated to HS-DSCH. The HS-PDSCH is transmitted with Associated Dedicated Physical Channel (A-DPCH). As a dedicated channel, A-DPCH is power controlled. The frame of HS-PDSCH (TTI of 2 ms) may be chosen to be very short compared to that of dedicated channels (10 ms) to allow fast scheduling and link adaptation. Applying soft handover would cause problems in distributing scheduling responsibilities across all Node B's of the active set and would require extremely tight timing to provide the scheduling decision to all members of the active set even if distribution of scheduling function were resolved. Therefore, soft handover is not supported for HS-PDSCH. Soft handover for A-DPCH is allowed which means it can be transmitted from more than one base station to a UE which combines obtained signals. The handover procedure related to a HSDPA radio link is called "serving HS-DSCH cell change".

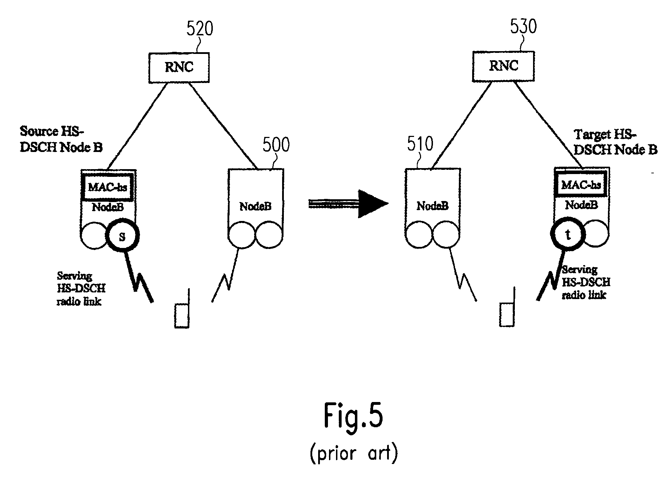

During the serving HS-DSCH cell change procedure, the role of the serving HS-DSCH link is transferred from one radio link to another. The two cells involved in the procedure are denoted source HS-DSCH cell and target HS-DSCH cell, as may be seen from FIG. 5. The "network-controlled serving HS-DSCH cell change" has the property that the network makes the decision on the target cell. In UMTS, this decision process is carried out in S-RNC. The cell change procedure can be initiated by the UE and it is then referred to as "UE-controlled serving HS-DSCH change procedure". Another criterion for categorising the cell change procedure is the one with respect to the serving HS-DSCH Node B.

The Node B controlling the serving HS-DSCH cell for a specific UE is defined as the "serving HS-DSCH Node B". An "intra-Node B serving HS-DSCH cell change procedure" is the cell change procedure with source and target HS-DSCH cells being controlled by the same Node B. In an "inter-Node B serving HS-DSCH cell change procedure", source and target HS-DSCH cells are controlled by different Node B's.

It is further to be noted that "synchronised serving cell change procedures" allow the Node B and UE to simultaneously start transmitting/receiving signals after handover completion. Synchronisation between the UE and the network is maintained with activation timers which are set by RRC entity in S-RNC. Due to unknown delays over lub/lur interfaces, processing and protocol delays, a suitable margin is assumed when determining activation timer setting. The margin also contributes to handover delay.

It should be noted that executing an inter-Node B serving HS-DSCH cell change procedure also implies executing a "serving HS-DSCH Node B relocation procedure" and this is where the problems of HARQ context relocation arise.

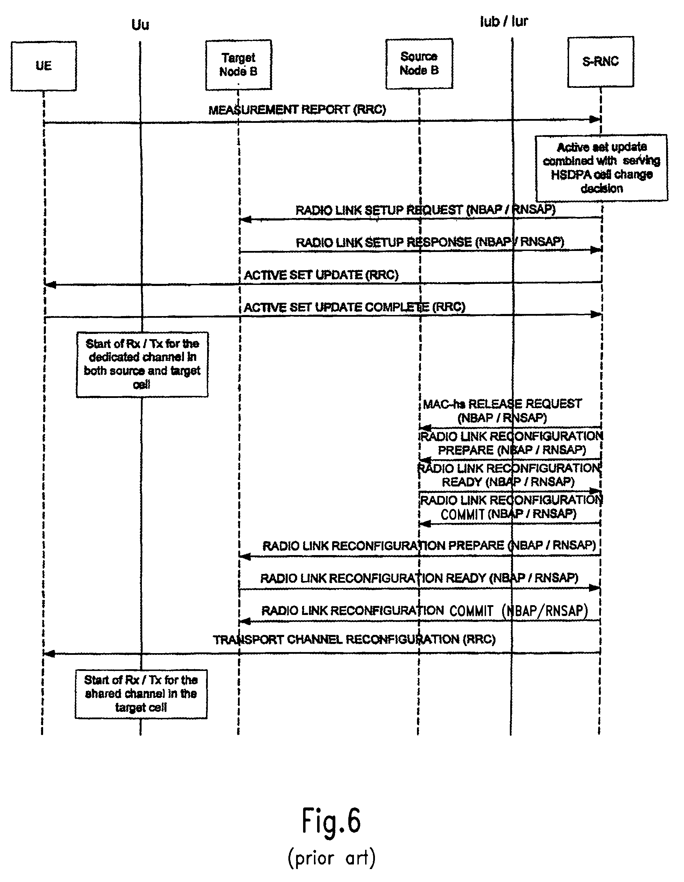

An example of the signalling during a synchronised inter-Node B serving cell change procedure will now be discussed with reference to FIG. 6 (*cf*. 3GPP TSG RAN, TR 25.308, "High Speed Downlink Packet Access (HSDPA): Overall Description Stage 2", V5.2.0 and 3GPP TSG RAN, TR 25.877, "High Speed Downlink Packet Access: lub/lur Protocol Aspects", V.5.1.0). In this simplified example, it is assumed that decisions on triggering active set update and cell change procedures are made in the S-RNC simultaneously.

Assuming the UE transmits a MEASUREMENT REPORT message to the S-RNC via RRC signalling, the S-RNC then determines the need for the combined radio link addition and serving HS-DSCH cell change based on received measurement reports. As the first step, the S-RNC initiates the establishment of a new radio link for the dedicated channels to the target Node B by transmitting a RADIO LINK SETUP REQUEST message via the RNSAP / NBAP protocol. The target Node B confirms the establishment of a radio link by transmitting a RADIO LINK SETUP RESPONSE message via the RNSAP/NBAP protocol. The RRC further transmits an ACTIVE SET UPDATE message to the UE via the RRC protocol. The ACTIVE SET UPDATE message includes the necessary information for the establishment of the dedicated physical channels in the added radio link (but not the HS-PDSCH). When the UE has added the new radio link it returns an ACTIVE SET UPDATE COMPLETE message via the RRC protocol. This completes the addition of the new radio link for dedicated channels.

The S-RNC will now carry on with the next step of the procedure, which is the serving HS-DSCH cell change. For the synchronised serving HS-DSCH cell change, both the source and target Node B's are first prepared for execution of the handover and the cell change at the activation time.

The S-RNC first exchanges signalling messages with the source Node B (RADIO LINK RECONFIGURATION PREPARE, RADIO LINK RECONFIGURATION READY and RADIO LINK RECONFIGURATION COMMIT via NBAP / RNSAP protocols). It should be noted that the RADIO LINK RECONFIGURATION COMMIT message contains activation time information for the source Node B. The same set of messages are subsequently exchanged with the target Node B. The only difference in signalling intended for the source and target Node B's is that the S-RNC informs the source Node B to carry out the reset of the MAC-hs entity by a MAC-hs RELEASE REQUEST message of the NBAP / RNSAP protocol.

Finally, a PHYSICAL CHANNEL RECONFIGURATION message is sent to the UE via RRC signalling. It contains activation time information and a request for a MAC-hs reset to the UE. When the communication is established, the UE responds with a PHYSICAL CHANNEL RECONFIGURATION COMPLETE message.

Several problems may occur during the inter-Node B serving cell change procedure, as will be now described in more detail. These problems may be summarised to relate to a packet loss and delay due to the cell change procedure, and to frequent cell changes due to the decision delay.

First, the packet loss problem due to the cell change procedure is discussed. As mentioned above, the serving HS-DSCH Node B relocation procedure involves also the problem of transferring the HARQ context from the serving to the target Node B. A direct physical interface in UTRAN between different base stations does not exist and hence, the context transfer would have to be performed via the RNC. This would involve a significant transfer delay and that is why current solutions are limited to flushing the reordering buffer at the UE side and transferring all successfully received packets to a higher layer when the Node B relocation procedure has to be performed. Also, all packets buffered in the Node B have to be discarded once the serving Node B change is performed.

Assuming that the S-RNC is identical to the D-RNC and that the one way lub delay equals 50 ms, the worst case Node B buffer occupancies per user and specific service can be calculated as shown in the following table. The table depicts the Node B minimum buffer occupancies. Depending on a specific flow control algorithm employed on the lub interface, the Node B buffer occupancy can vary.

| | | | |
|---|---|---|---|
| Service | 1.2 Mbps | 3.6 Mbps | 10 Mbps |
| Mean Node B buffer occupancy [byte] | 7500 | 22500 | 62500 |

Further, this data loss may also result in an additional delay. The delay problem due to the cell change procedure will now be discussed in more detail.

Apart from handover delays which are specific for all procedures and which may result from measurement and synchronisation delays as shown above, there is an additional delay introduced by data loss. This delay is incurred due to compensation of lost packets.

For interactive services requiring high reliability of data transmission it is usual to configure the RLC sublayer to work in an acknowledged mode. Since the entities of the RLC are placed in the RNC and UE, the RLC is transparent to the inter Node B serving cell change procedure. Thus, the packets lost from the Node B buffer and any missing packets detected in the sequence numbers of packets forwarded from the UE reordering buffer to a higher layer have to be compensated by RLC retransmissions. These will cause an additional delay mainly due to retransmitting these packets over interfaces of transport network.

This increased delay can trigger a spurious timeout of a reliable transport protocol (TCP) used for end-to-end transmissions and it may slow down the data rate of packets that are input to UTRAN due to congestion control mechanisms. This is described in, e.g., W. Stevens, "TCP/IP Illustrated", vol. 1, Addison Wesley, 1999. Assuming the TCP segment size to be equal to 1500 bytes, the amount of data lost in Node B buffers (see above table) is in the range from 5 to 41 segments. After performing the cell change procedure, the channel conditions of the user will most likely be improved. However, due to the invoked TCP congestion control, the number of packets that are available for scheduling is decreased and radio resources are not utilised efficiently.

Even more severe problems can occur in a network that has the RLC protocol configured in the unacknowledged mode, or in a conceptual network that has retransmission protocol entities just in the Node B and UEs. In this case all packets lost from the HARQ context would have to be retransmitted end-to-end thus causing even higher delay and inefficient usage of radio resources.

While the packet loss and delay problems due to the cell change procedure have thus been described in more detail, further problems may arise with frequent cell changes due to the decision delay.

As discussed above, the radio link addition function of the active set update procedure is triggered if the pilot signal of a certain Node B exceeds a certain threshold relative to the strongest pilot signal of the current active set. Thus, after completing the radio link addition for dedicated channels of a UE using the HSDPA radio link, it is possible that the new member cell can offer the best radio channel conditions to that UE. However, switching the HSDPA service to the new member cell simultaneously with the radio link addition does not necessarily have to be an optimal decision.

These are two possible cases for a conventional architecture: Either, the decision on triggering the radio link addition function of the active set update procedure and the serving cell change procedure is made by the S-RNC simultaneously (i.e., the serving cell change procedure is synchronised with the active set update procedure). Or, the decision on triggering the serving cell change procedure is made after the radio link addition function of the active set update procedure has been completed (i.e., the serving cell change procedure is not synchronised with the active set update procedure).

The problem may arise in particular when the serving cell change and the active set update procedures are not synchronised. If the decision on triggering the cell change procedure has been made with a significant delay, the channel conditions may change back by the time the procedure is complete. This would result in a continuous ping-pong behaviour between cells during which it is not possible to schedule the user. Thus, in case the active set update and the serving cell change procedures are unsynchronised, it is useful to trigger the cell change procedure as soon as possible.

WO 01/35586 A1 discloses a method and an apparatus for network controlled handovers in a packet switched telecommunications network. Radio resource requirements for mobile stations accessing shared media are stored on a permanent basis in base station system level. Thus, network-controlled handover can occur without the control of the element providing packets to the base station system.

WO 02/11397 A1 discloses a method for the header compression context control during a handover in mobile data communication networks. A header compressor is notified of a handover completion by the transmitter/receiver to resume operation according to the previously transferred context.

US 6,414,947 B1 discloses a communication network and a method of allocating a resource therefor. Resource scheduling in soft handover is described.

Given the above discussed problems with the prior art, it is the object of the invention to provide a cell change method and a corresponding cellular system that may overcome the negative impacts of data loss and delay during serving cell change procedures from one base station to another.

This object is solved by the invention as claimed in the independent claims.

Preferred embodiments are defined in the dependent claims.

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention, as illustrated in the accompanying drawings, wherein:
- FIG. 1: illustrates the high level UMTS architecture according to the prior art;
- FIG. 2: illustrates a conventional architecture of UTRAN;
- FIG. 3: illustrates drift and serving radio network subsystems;
- FIG. 4: illustrates the user plane radio interface architecture of HSDPA;
- FIG. 5: illustrates the handover between source and target HS-DSCH cells;
- FIG. 6: illustrates the inter-Node B serving HS-DSCH cell change signalling;
- FIG. 7: illustrates a UE HSDPA architecture that can be used in compliance with the technique of the present invention;
- FIG. 8: illustrates a Node B HSDPA architecture that can be used in compliance with the technique of the present invention;
- FIG. 9: illustrates a feedback measurement transmission timing that can be used in compliance with the technique of the present invention;
- FIG. 10: illustrates an RNC controlled inter-Node B serving cell change procedure with negotiation of the activation time, according to an embodiment of the present invention;
- FIG. 11: illustrates another RNC controlled inter-Node B serving cell change procedure with negotiation of the activation time, according to an embodiment of the present invention;
- FIG. 12: illustrates a Node B controlled inter-Node B serving cell change procedure without negotiation of the activation time, according to an embodiment of the present invention; and
- FIG. 13: illustrates a Node B controlled inter-Node B serving cell change procedure with negotiation of the activation time, according to an embodiment of the present invention.

The illustrative embodiments of the present invention will be described with reference to the figure drawings wherein like elements and structures are indicated by like reference numbers.

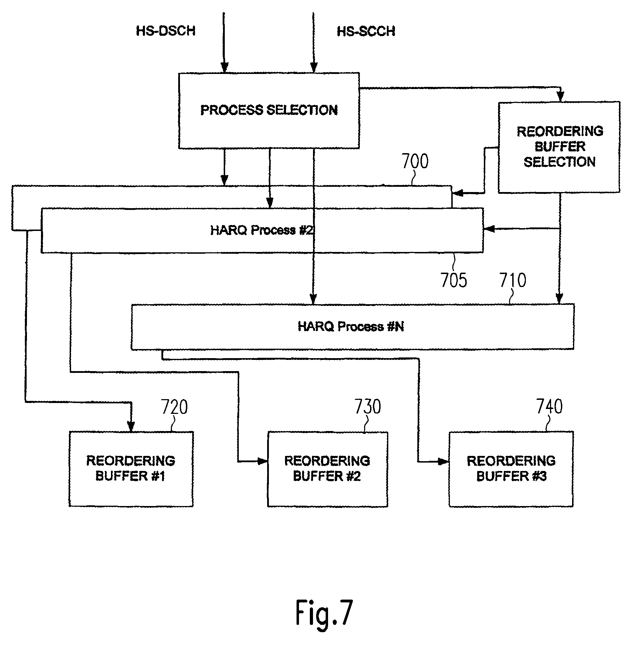

Before discussing in more detail the protocol context preservation according the invention, an HSDPA architecture will first be described with reference to FIGs. 7 to 9, in which the invention may be used.

Discussing first the UE HSDPA architecture, it is referred to FIG. 7. It can be noted that each HARQ process 700, 705, 710 is assigned a certain amount of soft buffer memory for combining the bits of the packets from outstanding retransmissions. Once a packet is received successfully, it is forwarded to the reordering buffer 720, 730, 740 providing the in-sequence delivery to the RLC sublayer. According to this architecture, the reordering queue may be tied to a specific priority.

It should be noted that the available soft buffer size may depend on UE radio access capability parameters such as those described in 3GPP TSG RAN, "Physical Layer Aspects of High Speed Downlink Packet Access", TR25.848, V5.0.0. The processing time of the UE for a certain MCS level and a minimum inter-TTI interval (minimum time between two successive scheduling instants) can also be considered as capability parameters. These are signaled from the UE to the RNC by the RRC protocol and further from the RNC to the Node B.

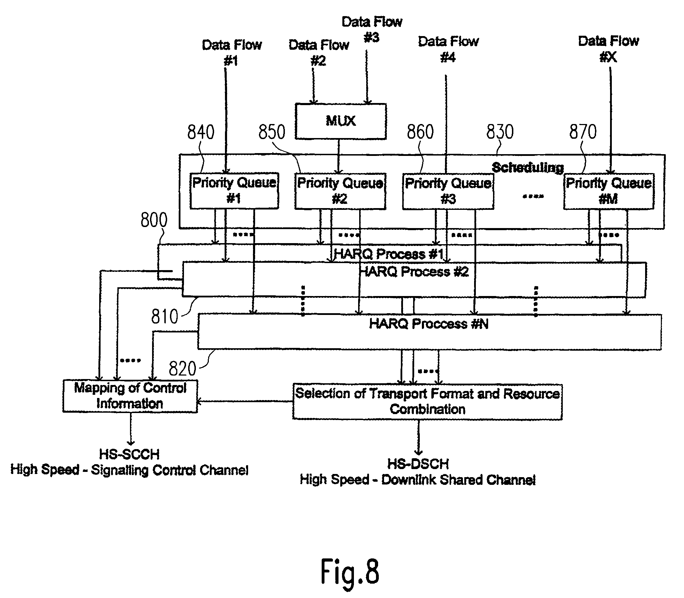

As to the HSDPA architecture Node B, a simple example of the HSDPA base station architecture is depicted in FIG. 8. There are many different data flows (logical channels) with data packets to be transmitted from the Node B to the UE. The set of HARQ transmitting and receiving entities, located in the Node B and the UE respectively, may be referred to as HARQ process. The maximum number of HARQ processes 800, 810, 820 per UE may be predefined. These data flows can have different QoS (e.g. delay and error requirements) and may require different configuration of HARQ instances. The scheduler will consider these parameters in allocating resources to different UE's. The scheduling function 830 controls the allocation of shared channel (HS-DSCH: High Speed Downlink Shared CHannel) to different users or to data flows of the same user, the current MCS level in one Time Transmission Interval (TTI) and manages existing HARQ instances for each user. A data flow or even a particular packet of a data flow may have a different priority. Therefore the Data Packets can be queued in different priority queues 840, 850, 860, 870. Different data flows with similar QoS requirements may also be multiplexed together (e.g. Data Flow #3 and #4). Besides the high speed downlink shared channel that carries the data packets there is control data which is mapped onto the HS-SCCH (High Speed Shared Control CHannel). This could carry data such as the HARQ process ID, the modulation scheme, code allocation, transport format etc that is needed by the receiver to correctly receive, demodulate, combine and decode the packets.

It should be noted that there may be a number of packets waiting to be scheduled for the initial transmission to some of the available HARQ processes and also a number of packets pending for retransmissions. Further, the state of HARQ processes depends on whether they are available for accepting packets for initial transmission or they still retransmit the pending packets that are to be combined in UE. In the following description, this information will be referred to as "HARQ context" or "MAC-hs protocol context of a UE".

In particular, the HARQ context may include: packets waiting for an initial transmission, packets waiting for retransmission, and the state of HARQ processes.

Power control commands referring to the A-DPCH obtained from the UE can be used as an index for estimating channel quality.

Another possibility to estimate the channel quality is by means of a channel quality indicator (CQI) obtained from uplink signalling.

Referring now to the HSDPA uplink signalling, this signalling may be carried out by means of the dedicated uplink feedback channel transmitted by the UE. The CQI transmitted on this channel contains a TFRC (Transport Format Resource Combination). The primary benefit of requesting a TFRC compared to signalling the channel state is that it can deal with different UE implementations resulting in different performance for a certain transport format at a specific channel state. A low TFRC value corresponds to bad channel conditions (lower level modulation, low code rate) and a high TFRC value maximises throughput for good channel conditions. The Node B does not necessarily have to follow the request of the UE. A UE may use certain criteria to determine which transmission format it is able to receive in given channel conditions. All the coded bits will be mapped onto the HSDPA UL-DPCCH (Uplink Dedicated Physical Control CHannel). In UMTS FDD (Frequency Division Duplex), the HS-DSCH related uplink signalling can use DPCCH-HS with a spreading factor=256 that is code multiplexed with the existing dedicated uplink physical channels.

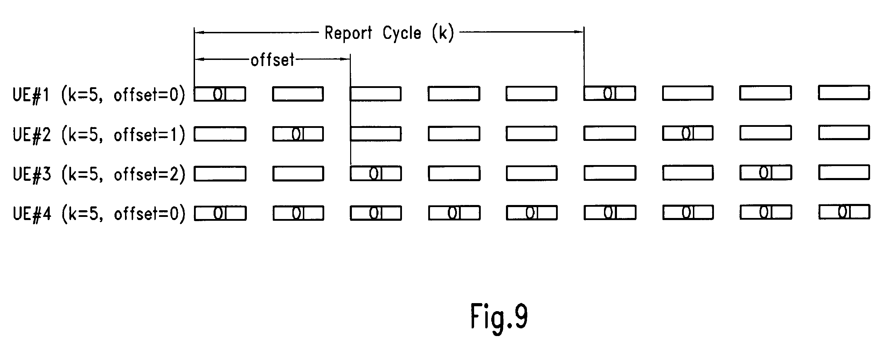

The transmission cycle and timing for channel quality indicator is determined by UTRAN and signalled by the control plane. Measurement feedback cycle k has a possible value of {1, 5, 10, 20, 40, 80} TTI. The larger the value of k the smaller is the signalling overhead in the uplink at the expense of decreased scheduling performance in the downlink. The set of values for measurement feedback offset / has yet to be determined. An illustration of feedback measurement transmission timing is given in FIG. 9.

While an environment has so far been described in which the invention may be performed, the context preserving technique of the present invention will now be discussed in more detail. As will be apparent from the following description, a part of the HARQ context of the source Node B (i.e. packets pending for initial transmission and packets pending for retransmission) will be preserved. The steps to achieve this, may be one or more of the following approaches:
(1) Inter Node B serving cell change aware flow control in HS-DSCH FP;
(2) Inter Node B serving cell change aware scheduling function in MAC-hs; and
(3) Additional control plane signalling messages within NBAP/RNSAP protocols.

As will be apparent from the more detailed description below, the invention is applicable to both synchronised and unsynchronised active set update and serving cell change procedures. The following embodiments may be grouped into a category of synchronised active set update and inter-node B serving cell change procedures, and a category of unsynchronised active set update and inter-node B serving cell change procedures. In case of synchronised procedures, it is assumed that serving cell change and active set update procedures are decided upon simultaneously by S-RNC and carried out at the same time instant. This time instant is denoted as activation time. In other words, the activation time is the time at which to activate an active set update process and a handover.

In the category of synchronised procedures, RNC controlled serving cell changes without changing the activation time may be distinguished from those with changing the activation time. Similarly, the unsynchronised procedures may be divided into Node B controlled serving cell changes without and with changing the activation time.

### Synchronised Active Set Update and Inter-Node B Serving Cell Change Procedures

In the case of RNC controlled serving cell changes without changing the activation time, two approaches may be distinguished. In the first approach, an intelligent flow control is performed in the RNC, whereas in the second approach, an intelligent flow control and scheduling function is performed in the Node B. It is to be noted that these two approaches may be combined.

Intelligent flow control in RNC means that the RNC should stop sending CAPACITY REQUEST messages to the source Node B once the decision on active set update and serving cell change procedures has been made.

Intelligent flow control and scheduling function in the Node B may encompass the following steps. The S-RNC informs the Node B on the decision and on the activation time. Then, the Node B flow control (in HS-DSH FP) denies all CAPACITY REQUESTS from the user. Further, the Node B scheduling function (in MAC-hs) gives a higher priority to packets from the user pending for an initial transmission/retransmission in order to expedite their delivery before the activation time.

The technique of RNC controlled serving cell changes with changing the activation time is similar to the RNC controlled serving cell changes without changing the activation time, as described above, but differs therefrom in that the Node B may propose a new value for the activation time after being notified by the S-RNC on the initial value. The S-RNC may decide either to accept this value or to retain the old one. In the following, it is referred to this procedure as activation time negotiation procedure.

The flow control and scheduling function can then be described as follows. First, the S-RNC informs the Node B on the decision and on the activation time. The activation time negotiation procedure is carried out by exchanging NBAP/RNSAP ACTIVATION TIME NEGOTIATION REQUEST and RESPONSE messages between Node B and RNC. Further, the Node B flow control (in HS-DSH FP) denies all CAPACITY REQUESTS from the user. Moreover, the Node B scheduling function (in MAC-hs) gives a higher priority to packets from the user pending for an initial transmission/retransmission in order to expedite their delivery before reaching the agreed activation time.

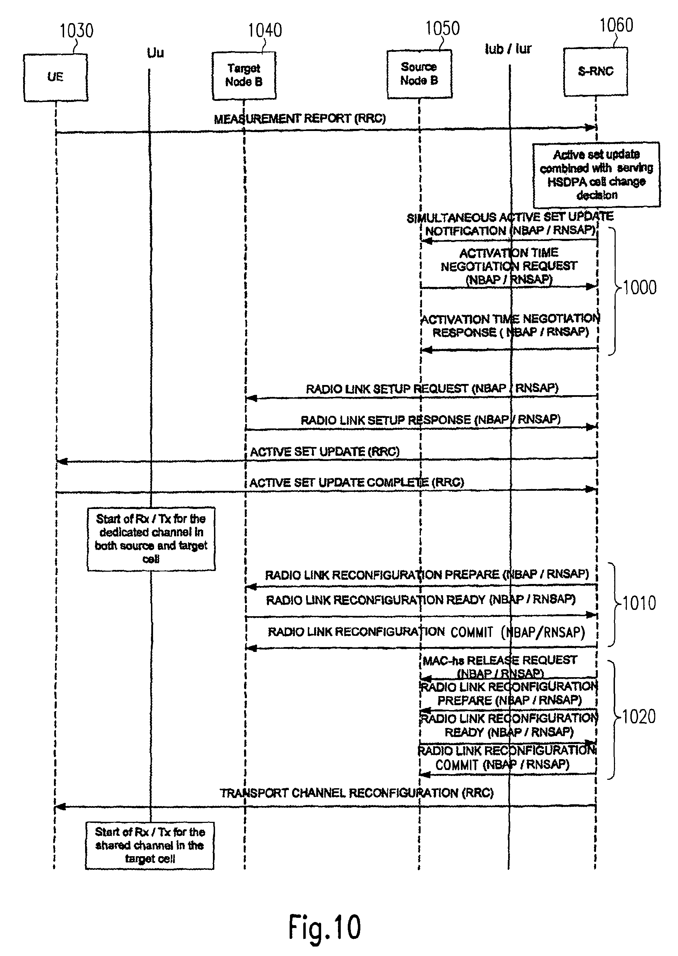

A signalling example for RNC controlled serving cell change with changing activation time will now be described with reference to FIG. 10. As already mentioned earlier when discussing FIG. 6, the source Node B is informed of the activation time after completion of the active set update procedure. However, since the decision on the active set update is combined with that on the serving Node B cell change procedure initiation, it is advantageous to inform the Node B on the activation time immediately after the decision has been made, as done in the embodiment of FIG. 10 by messages 1000. The CMAC-HS-Release-REQ primitive 1020 will then be sent after the target Node B has been informed of the activation time by messages 1010.

### Unsynchronised Active Set Update and Inter-Node B Serving Cell Change Procedures

In this case it is assumed that the Node B decides upon the serving cell change procedure after the active set has been updated. This approach applies in case the active set update and the serving cell change procedures are unsynchronised.

The higher layer signalling for measurements requires much time because the signalling needs to reach all the way to the S-RNC. Therefore, a fast cell site selection can be Node B-initiated based on physical layer measurements (CQI, power control commands for A-DCH, transmission power). This contributes to decreasing the cell change procedure decision delay and avoiding a ping-pong effect. Since the Node B makes a decision on initiating the cell change procedure it can adjust the scheduling algorithm so that a loss of the context is prevented. The procedure may be describes as follows.

First, the S-RNC notifies the source Node B that an active set update procedure will be carried out. From that moment on, the Node B has the permission to initiate a serving cell change procedure with a newly added Node B being the target Node B. The Node B may then monitor the channel quality and/or the transmission power used in the channel, e.g., by monitoring the time average of CQI reports, power control commands for A-DCH, and/or the transmission power, until it decides on the cell change procedure. The Node B then informs the S-RNC that the cell change procedure should be initiated (e.g. by a NBAP / RNSAP CELL CHANGE PROCEDURE NOTIFICATION message). The Node B flow control function (in HS-DSH FP) stops admitting any additional packets from RNC for the particular user. Further, the Node B scheduling function (in MAC-hs) gives a higher priority to packets from the user pending for an initial transmission/retransmission in order to expedite their delivery before the activation time.

With respect to the activation time setting, it was already mentioned that the unsynchronised procedures may be divided into Node B controlled serving cell changes without and with changing the activation time. Thus, there are two possibilities for determining the activation time in Node B controlled serving cell change methods.

Firstly, the activation time may be set by the Node B and communicated to the S-RNC within a NBAP/RNSAP CELL CHANGE PROCEDURE NOTIFICATION message. In this case, the method is referred to as Node B controlled serving cell change without changing the activation time.

Secondly, the activation time may be set by the S-RNC and communicated to the Node B after the CELL CHANGE PROCEDURE NOTIFICATION message (NBAP/RNSAP ACTIVATION TIME NOTIFICATION message). The Node B may initiate and carry out a negotiation procedure for the activation time by using the same set of messages as described above. In this case, the method is referred to as Node B controlled serving cell change with changing the activation time.

Thus, various embodiments have been described that may be used to preserve the context in an inter-base station handover. The following table gives a short overview.

| | HS-DSCH FP flow control | MAC-hs scheduling | Relation of active set update and serving cell change procedures | Activation time |
|---|---|---|---|---|
| RNC controlled serving cell change without changing activation time | In RNC or Node B or in both network elements | Not used in case flow control is in RNC only, otherwise Yes | Synchronised | Determined by RNC |
| RNC controlled serving cell change with changing activation time | Yes, in Node B | Yes | Synchronised | Initially set by RNC and negotiated between RNC and source Node B |
| Node B controlled serving cell change without changing activation time | Yes, in Node B | Yes | Unsynchronised | Determined by Node B |
| Node B controlled serving cell change with changing activation time | Yes, in Node B | Yes | Unsynchronised | Initially set by RNC and negotiated between RNC and source Node B. |

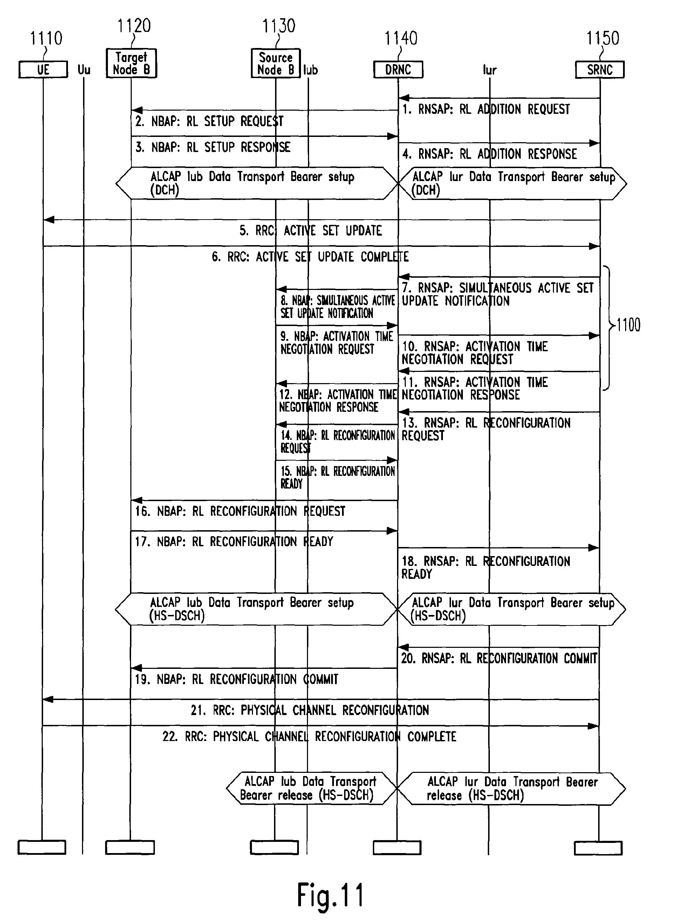

Referring now to FIG. 11, a more detailed embodiment of RNC controlled serving cell changes with changing activation time will now be discussed. In this figure, the various signallings have been numbered for easier reference. The process may be described as follows:

First, the S-RNC 1150 decides there is a need for an addition of a radio link, which would become the new serving HS-DSCH cell. As a first step the S-RNC 1150 requests the D-RNC 1140 with signalling 1 to establish the new radio link without the HS-DSCH resources by transmitting a RADIO LINK ADDITION REQUEST message to the D-RNC 1140.

The D-RNC 1140 then allocates radio resources for the new radio link and requests the target Node B 1120 with signalling 2 to establish a new radio link by transmitting a RADIO LINK SETUP REQUEST message including the necessary parameters for DPCH establishment.

The target Node B 1120 allocates resources, starts physical layer reception on the DPCH 1140 on the new radio link and responds with a RADIO LINK SETUP RESPONSE message, i.e. with signalling 3.

With signalling 4, the D-RNC 1140 responds to the S-RNC 1150 by transmitting a RADIO LINK ADDITION RESPONSE message. The DCH transport bearer is then established.

The S-RNC 1150 then prepares an ACTIVE SET UPDATE message (signalling 5) and transmits it to the UE 1110. The message includes an identification of the radio link to add.

The UE 1110 will now add the new radio link to its active set and return an ACTIVE SET UPDATE COMPLETE message (signalling 6) to the S-RNC 1150.

Signallings 7 to 12 are used to perform the activation time negotiation process 1100 according to the embodiment. The S-RNC 1150 transmitts an RNSAP SIMULTANEOUS ACTIVE SET UPDATE NOTIFICATION message to the D-RNC 1140 which will react thereto by transmitting an NBAP SIMULTANEOUS ACTIVE SET UPDATE NOTIFICATION message to the Node B 1130 (signallings 7 and 8). The Node B 1130 will the transmit an NBAP ACTIVATION TIME NEGOTIATION REQUEST (signalling 9) to the D-RNC 1140 which will react thereto by transmitting an RNSAP ACTIVATION TIME NEGOTIATION REQUEST to the S-RNC 1150 (signalling 10). In response thereto, the S-RNC 1150 transmitts an RNSAP ACTIVATION TIME NEGOTIATION RESPONSE message to the D-RNC 1140 which will react thereto by transmitting an NBAP ACTIVATION TIME NEGOTIATION RESPONSE message to the Node B 1130 (signallings 11 and 12). Thus, the activation time negotiation process 1100 of FIG. 11 substantially corresponds to the process 1000 of FIG. 10.

As the next step, the S-RNC 1150 prepares a RADIO LINK RECONFIGURATION REQUEST message (signalling 13) which is transmitted to the D-RNC 1140. The message indicates the target HS-DSCH cell.

If it is assumed that the source and target HS-DSCH cells are controlled by different Node B's, the D-RNC 1140 requests the source HS-DSCH Node B 1130 with signalling 14 to perform a synchronised radio link reconfiguration using the RADIO LINK RECONFIGURATION REQUEST message, removing its HS-DSCH resources for the source HS-DSCH radio link. The source Node B 1130 then returns a RADIO LINK RECONFIGURATION READY message (signalling 15) to the D-RNC 1140.

With signalling 16, the D-RNC 1140 requests the target HS-DSCH Node B 1120 to perform a synchronised radio link reconfiguration using the RADIO LINK RECONFIGURATION REQUEST message, adding HS-DSCH resources for the target HS-DSCH radio link. The message also includes necessary information to setup the HS-DSCH resources in the target HS-DSCH cell, including a D-RNC selected HS-DSCH UE identity. The source HS-DSCH Node B 1130 returns a RADIO LINK RECONFIGURATION READY message (signalling 17). The D-RNC 1140 then returns a RADIO LINK RECONFIGURATION READY message (signalling 18) to the SRNC 1150. The message includes HS-SCCH set info, scrambling code for the target HS-DSCH cell and the HS-DSCH UE identity.

The HS-DSCH transport bearer to the target HS-DSCH Node B 1120 is now established. The S-RNC 1150 proceeds by transmitting RADIO LINK RECONFIGURATION COMMIT message (signalling 19) to the D-RNC 1140 including an S-RNC selected activation time in the form of a CFN.

The D-RNC transmits RADIO LINK RECONFIGURATION COMMIT messages (signalling 20) to the source HS-DSCH Node B 1130 and the target HS-DSCH Node B 1120 including the activation time. At the indicated activation time, the source HS-DSCH Node B 1130 stops and the target HS-DSCH Node B 1120 starts transmitting on the HS-DSCH to the UE 1110.

The S-RNC 1150 also transmits a PHYSICAL CHANNEL RECONFIGURATION message (signalling 21) to the UE1110. The message includes activation time, MAC-hs reset indicator, serving HS-DSCH radio link indicator, HS-SCCH set info and HS-DSCH UE identity.

Finally, at the indicated activation time, the UE 1110 resets MAC-hs, stops receiving HS-DSCH in the source HS-DSCH cell and starts HS-DSCH reception in the target HS-DSCH cell. The UE 1110 then returns a PHYSICAL CHANNEL RECONFIGURATION COMPLETE message (signalling 22) to the S-RNC. The HS-DSCH transport bearer to the source HS-DSCH Node B 1130 is released.

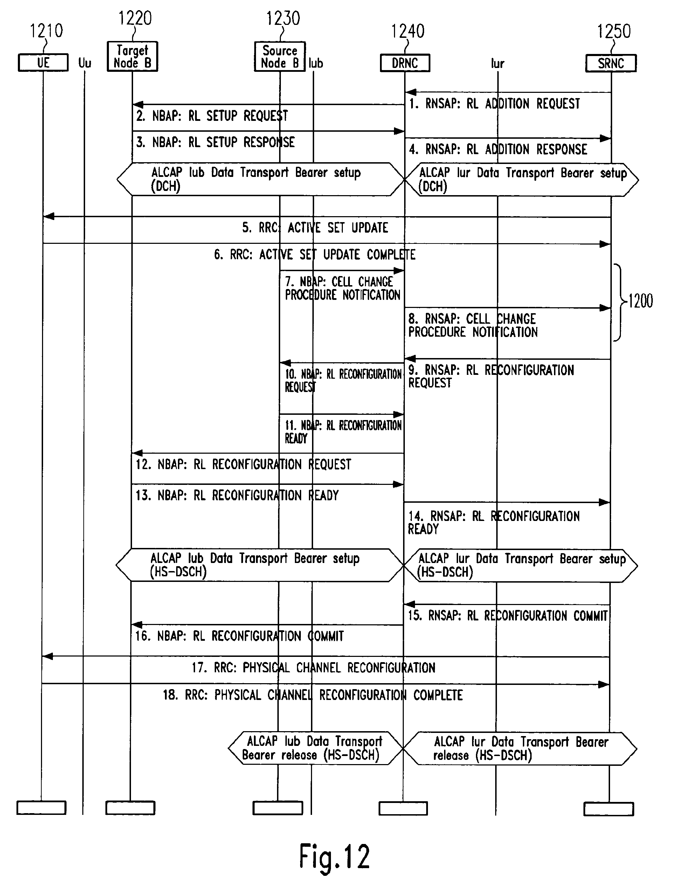

Turning now to FIG. 12, an embodiment of a Node B controlled serving cell change without changing the activation time is depicted. Most of the signalling is the same as described above with reference to FIG. 11. In addition, the procedure 1200 is provided. The source Node B 1230 transmits an NBAP CELL CHANGE PROCEDURE NOTIFICATION message (signalling 7) to the D-RNC 1240 which generates an RNSAP CELL CHANGE PROCEDURE NOTIFICATION message (signalling 8) therefrom and transmits same to the S-RNC 1250. By means of these messages, the source Node B 1230 can control the serving cell change as described in more detail above.

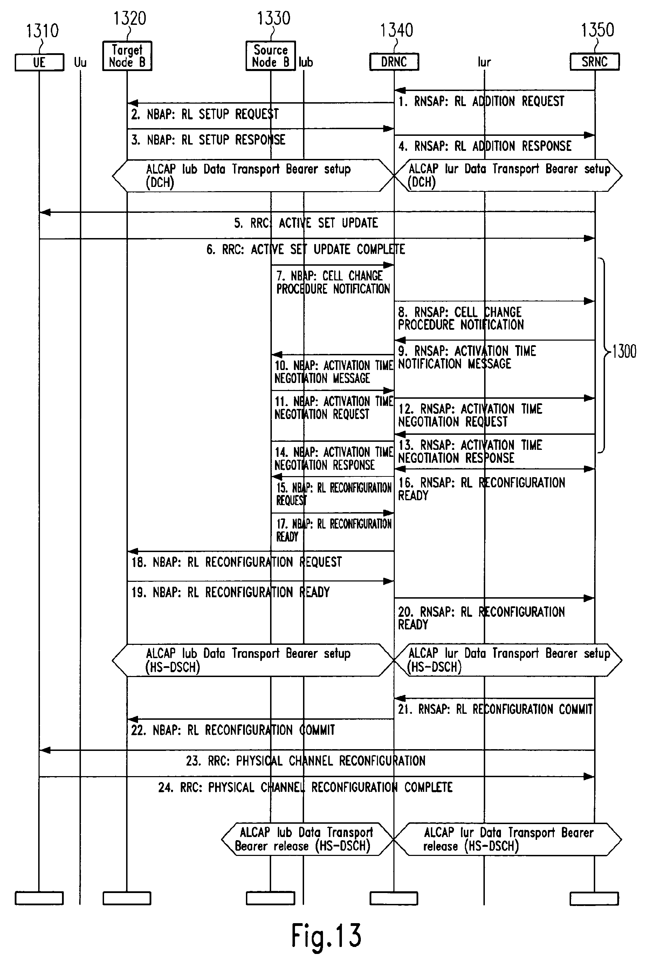

An embodiment of a Node B controlled serving cell change with changing the activation time is depicted in FIG. 13. In this embodiment, signallings 7 and 8 correspond to those of FIG. 12. In addition thereto, the process 1300 comprises activation time related signallings 9 to 14. In detail, the S-RNC 1350 transmits an RNSAP ACTIVATION TIME NOTIFICATION message (signalling 9) to the D-RNC 1340 where a corresponding NBAP message is generated and transmitted to the source Node B 1330 as signalling 10. The following signallings 11 to 14 correspond to signallings 9 to 12 of FIG. 11, so that it is referred to the respective description above.

As apparent from the foregoing, the invention relates to radio resource management in communication systems and is particularly applicable to cellular systems. When mobile station (MS) changes its serving Node B, the protocol context (state variables and buffered packets) may be preserved to improve latency and network resource utilisation.

The invention may be related to ARQ Type II and Type III schemes, where the received (re)transmissions are combined. Thus, the technique of the various embodiments can be considered as a link adaptation technique since the redundancy can be adapted according to the channel conditions.

It is to be noted that the various embodiments can further be considered as an improved packet scheduling technique where the scheduler may be assumed to operate on TTI basis.

Further, it was already apparent that the invention is particularly applicable to HSDPA. Although most of the presented embodiments refer to HSDPA, the invention is not restricted to this system. Therefore the data transmission does not necessarily depend on a particular radio access scheme. The invention is applicable to any mobile communication system with distributed architecture.

## Claims

1. A cell change method of transferring the radio link of a mobile station (120, 1030, 1110, 1210, 1310) in a cellular system from a source cell controlled by a first base station (240-270, 500, 1050, 1130, 1230, 1330) to a target cell controlled by a second base station (240-270, 510, 1040, 1120, 1220, 1320), wherein said first and second base stations are controlled by a first and second radio network controller (220, 230, 310, 520, 530, 1060, 1150, 1250, 1350), respectively, wherein said first radio network controller and/or said first base station perform a radio resource management and flow control process comprising the steps of:
determining that a cell change is to be performed; and
blocking capacity assignments for data transmissions from said first radio network controller to said first base station before having established a radio link to said target cell.

2. The method of claim 1, wherein said flow control process is performed by said first radio network controller and the step of blocking capacity assignments comprises the step of:
preventing capacity request messages relating to said mobile station from being transmitted to said first base station.

3. The method of claim 1 or 2, wherein said radio resource management and flow control process further comprises the step of:
transmitting a message from said first radio network controller to said first base station indicating that a cell change is to be performed,
wherein the step of blocking capacity assignments comprises the step of:
preventing capacity grant messages from being transmitted from said first base station to said first radio network controller in response to capacity request messages relating to said mobile station.

4. The method of one of claims 1 to 3, wherein said first base station performs a scheduling process comprising the step of:
assigning a higher priority to data packets relating to said mobile station, in response to determining that a handover is to be performed.

5. The method of one of claims 1 to 4, wherein said first radio network controller further performs an update process for updating an active set of radio links relating to said mobile station, wherein said cell change is synchronised with said update process.

6. The method of claim 5, wherein said radio resource management process further comprises the steps of:
determining that an update process is to be performed, said determination being performed simultaneously with the determination that a cell change is to be performed;
transmitting an update notification message from said first radio network controller to said first base station indicating that a cell change is to be performed simultaneously with the update process; and
transmitting a time notification message (1000) from said first radio network controller to said first base station indicating an activation time at which to activate said update process and said cell change.

7. The method of claim 6, further comprising the step of deciding in said first base station and said first radio network controller when to perform cell change procedure, wherein said step of deciding comprises:
transmitting a message from said first base station to said first radio network controller after having received said time notification message for negotiating a different activation time; and
transmitting a message from said first radio network controller to said first base station in response to said message.

8. The method of one of claims 1 to 7, wherein said first radio network controller and/or said first base station further perform an update process for updating an active set of radio links relating to said mobile station, wherein said cell change process is not synchronised with said update process.

9. The method of claim 8, wherein said radio resource management process further comprises the step of:
deciding in said first radio network controller whether an update process is to be performed,
wherein the step of determining that a cell change is to be performed is performed by said first base station if said first radio network controller has decided that an update process is to be performed.

10. The method of claim 9, wherein the step of determining that a cell change is to be performed comprises the step of:
monitoring in said first base station the quality of the shared channel, the transmission power used in the shared channel, or power control commands of an associated dedicated channel.

11. The method of claim 9 or 10, further comprising the step of deciding in said first base station when to perform a cell change procedure, wherein said step of deciding comprises:
determining in said first base station an activation time at which to activate said cell change; and
transmitting a time notification message (1000) from said first base station to said first radio network controller indicating said activation time.

12. The method of one of claims 9 to 11, further comprising the step of deciding in said first radio network controller and/or said first base station when to perform a cell change procedure, wherein said step of deciding comprises:
determining in said first radio network controller an activation time at which to activate said update process;
transmitting a time notification message from said first radio network controller to said first base station indicating said activation time; and
transmitting a message from said first base station to said first radio network controller and a message from said first radio network controller to said first base station for negotiating a different activation time.

13. The method of one of claims 1 to 12, wherein said cellular system is a UMTS system, said base stations and radio network controllers are comprised in the UTRAN, and said flow control process is a function of the HS-DSCH FP.

14. The method of claim 13, wherein said first base station performs a scheduling process in the MAC-hs sublayer by assigning a higher priority to data packets relating to said mobile station, in response to determining that a handover is to be performed.

15. The method of claim 13 or 14, wherein said first radio network controller and said first base station exchange control plane signalling messages within NBAP/RNSAP protocols to perform an activation time negotiation.

16. A cellular system comprising:
a mobile station;
a first base station in a source cell;
a first radio network controller for controlling said first base station;
a second base station in a target cell;
a second radio network controller for controlling said second base station;
wherein said first radio network controller and/or said first base station comprise a flow control unit and a radio resource management function for determining that a cell change is to be performed, said cell change being for transferring the radio link of said mobile station from said source cell to said target cell, wherein said flow control unit is adapted to block capacity assignments for data transmissions from said first radio network controller to said first base station before a network connection to said target cell is established.

17. The system of claim 16, adapted to perform the method of one of claims 1 to 15.
